# EUROPÄISCHE PATENTANMELDUNG

(11) **EP 4 273 076 A1**
(43) Veröffentlichungstag der Anmeldung: **08.11.2023**
(21) Anmeldenummer: 23170543.5
(22) Anmeldetag: 28.04.2023
(51) Int. Cl.: B65G 47/84, B67C 3/24

(54) **HANDHABUNG VON BEHÄLTERN MIT KURZEM BEHÄLTERHALS**

(30) Priorität: 04.05.2022 DE 102022110945
(71) Anmelder: KRONES AG, 93073 Neutraubling (DE)
(72) Erfinder: LANDLER, Bruno, 93073 Neutraubling (DE); SPANDL, Stefan, 93073 Neutraubling (DE); GLOETZL, Reiner, 93073 Neutraubling (DE)
(74) Vertreter: v. Bezold & Partner Patentanwälte - PartG mbB

(57) **Zusammenfassung**

Die Erfindung betrifft u.a. eine Neckhandling-Behälterhalterung (22) für einen Behälterförderer (16), aufweisend ein Tragelement (26) zum Abstützen eines Behälters (12) an einem Halsring des Behälters (12). Ein Positionierelement (28) ist zum Einstellen einer Höhenposition des Tragelements (26) mit dem Tragelement (26) verbunden. Das Positionierelement (28) ist zum Kontaktieren einer Mündung des Behälters (12) oberhalb von dem Tragelement (26) angeordnet und gemeinsam mit dem Tragelement (26) vertikal verschiebbar gelagert. Vorteilhaft ermöglicht die Neckhandling-Behälterhalterung (22) ein sicheres Neckhandling von Behältern mit kurzem Behälterhals.

## Beschreibung

### Technisches Gebiet

Die Erfindung betrifft eine Neckhandling-Behälterhalterung, eine Verwendung einer Neckhandling-Behälterhalterung sowie eine Vorrichtung zum Fördern von Behältern.

### Technischer Hintergrund

Behälter und Behältergebinde können in Behälterbehandlungsanlagen durch die einzelnen Anlagenteile transportiert und bspw. gereinigt, gefüllt, verschlossen, geprüft, etikettiert oder bedruckt werden. Es gibt diverse Konzepte zum Befördern der Behälter in der Behälterbehandlungsanlage, die auch unterschiedliche Arten des Angriffs der Behälter zum Transport umfassen.

So ist es einerseits bekannt, Behälter im sogenannten Neckhandling-Verfahren zu transportieren. Beim Neckhandling werden die Behälter an ihrem üblicherweise vorgesehenen Tragring bzw. Halsring umklammert oder in sonstiger geeigneter Weise am Kopfbereich gegriffen und hängend durch eine Transporteinrichtung oder Behälterbehandlungsmaschine transportiert. Dies bietet den Vorteil, dass das übrige Behältervolumen, z. B. der Behälterrumpf und der Behälterboden, zugänglich sein können und beispielsweise im Rahmen einer Inspektion des Behälters betrachtet werden kann.

Eine Alternative zum Transport per Neckhandling ist der Transport der Behälter im sogenannten Basehandling-Verfahren. Beim Basehandling werden die Behälter entweder stehend auf einem Transportband befördert oder zumindest im unteren Bereich (Bodenbereich) des Behälters gegriffen.

Die Übergabe der Behälter vom Basehandling zum Neckhandling kann bestimmte Schwierigkeiten aufweisen. Beispielsweise kann über eine Basehandling-Heberampe zum Neckhandling übergeben werden. Dieses Übergabekonzept funktioniert insbesondere bei Behältern mit einem hohen Neckhandling-Eingriffsbereich zwischen Behältertragring und Behälterschulter, d.h. einem großen Hals. Bei Behältern, die nur einen geringen Neckhandling-Eingriffsbereich zwischen Behältertragring und Behälterschulter, d.h. einen kurzen Hals, bieten, kann dieses Übergabekonzept hingegen nur unzureichend oder gar nicht funktionieren. Problematisch sind in diesem Zusammenhang zudem die Herstellungstoleranzen der Behälter, durch die bspw. Abweichungen von 1 mm bezüglich einer Höhenposition eines Halsrings möglich sind, was ein zuverlässiges Neckhandling am ohnehin kurzen Hals zusätzlich verkompliziert.

Die WO 92/11197 A1 offenbart eine Gefäßbehandlungsmaschine mit mindestens einem Behandlungsorgan und einer zugeordneten Vorrichtung zum Halten von Gefäßen mit einem Halskragen im Bereich unterhalb der Mündung. Die Vorrichtung umfasst ein den Halskragen unterstützendes Tragelement und ein dazu relativ abstandsveränderbares Zentrierelement, sodass ein zu behandelndes Gefäß axial zwischen Halskragen und Mündung einspannbar und zentrierbar ist.

Der Erfindung liegt die Aufgabe zu Grunde, eine verbesserte Technik zum Neckhandling von Behältern mit kurzem Hals und/oder zur Übergabe von Behältern mit kurzem Hals vom Basehandling zum Neckhandling zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft eine Neckhandling-Behälterhalterung für einen Behälterförderer. Die Neckhandling-Behälterhalterung weist ein (z. B. plattenförmiges) Tragelement zum Abstützen eines Behälters an einem Halsring des Behälters (z. B. von unterhalb des Halsrings oder den Halsring von oben und unten umgreifend) auf. Die Neckhandling-Behälterhalterung weist ein Positionierelement auf, das zum Einstellen einer Höhenposition des Tragelements mit dem Tragelement verbunden ist. Das Positionierelement ist zum Kontaktieren einer Mündung des Behälters oberhalb von dem Tragelement angeordnet und gemeinsam mit dem Tragelement vertikal verschiebbar gelagert.

Vorteilhaft ermöglicht die Neckhandling-Behälterhalterung ein Neckhandling von Behältern mit kurzem Behälterhals (z. B. mit einer Höhe von rd. 2 mm), d.h. geringem Eingriffsbereich zwischen Halsring (Tragring) und Schulter des Behälters, sowie optional eine sichere Übernahme dieser Behälter aus einem Basehandling. Die Neckhandling-Behälterhalterung ermöglicht eine Selbstpositionierung des Tragelements mittels des Positionierelements. Hierbei wird ausgenutzt, dass auch bei großen Herstellungstoleranzen der Behälter, die somit unterschiedlich hoch sind, ein Abstand zwischen Mündung und Behälterhals bei den Behältern im Wesentlichen konstant ist. Durch Auflage des Positionierelements auf die Mündung kann somit das Tragelement auf die richtige Höhenposition zum Eingreifen mit dem Behälterhals gebracht werden. Die Neckhandling-Behälterhalterung kann damit eine Funktionsfähigkeit des Neckhandling-Transports der Behälter ohne Beschädigungen sicherstellen.

In einem Ausführungsbeispiel ist das Positionierelement plattenförmig, balkenförmig, stabförmig oder zungenförmig. Alternativ oder zusätzlich ist das Positionierelement als ein Kragarm ausgeführt. Vorteilhaft kann damit ermöglicht werden, dass das Positionierelement beim Einschieben des Behälters in die Neckhandling-Behälterhalterung sicher auf der Mündung platziert werden kann.

In einem weiteren Ausführungsbeispiel ist das Positionierelement über das Tragelement hinaus überstehend ausgebildet, vorzugsweise in einer Richtung entgegengesetzt zu der vertikal verschiebbaren Lagerung (bzw. hin zu dem zu übernehmenden Behälter). Vorteilhaft kann damit erreicht werden, dass das Positionierelement zuerst in Kontakt mit der Mündung gelangt, bevor das Tragelement in Kontakt mit dem Behälter gelangt.

In einem weiteren Ausführungsbeispiel weist das Positionierelement ein freies Ende (z. B. in einer Richtung entgegengesetzt zu der vertikal verschiebbaren Lagerung bzw. hin zu dem zu übernehmenden Behälter) auf, das nach oben gekrümmt, gebogen oder angewinkelt ist. Vorteilhaft kann damit erreicht werden, dass der Behälter sicher unter das Positionierelement geschoben werden kann und es beispielsweise zu keiner Blockade durch Schieben des Behältermundstücks gegen das freie Ende des Positionierelements kommt.

In einer Ausführungsform sind das Positionierelement und das Tragelement relativ zueinander unbewegbar miteinander verbunden (z. B. mittels eines Verbindungskörpers der Neckhandling-Behälterhalterung). Vorteilhaft kann damit erreicht werden, dass das Positionierelement das Tragelement sicher auf die gewünschte Höhenposition unterhalb der Mündung am Hals des Behälters positionieren kann.

In einer weiteren Ausführungsform weist die Neckhandling-Behälterhalterung ferner ein Hubelement zum gemeinsamen Anheben des Positionierelements und des Tragelements, vorzugsweise unmittelbar vor einer Behälterübernahme und/oder geführt entlang mindestens einer Führungsstange, an der das Positionierelement und das Tragelement gemeinsam vertikal verschiebbar gelagert sind (z. B. mittels eines Verbindungskörpers), auf. Vorteilhaft kann das Hubelement ein gemeinsames Anheben und/oder Absenken des Tragelements und des Positionierelements ermöglichen, um beispielsweise vor Behälterübernahme das Positionierelement sicher oberhalb der Mündung positionieren zu können.

Vorzugsweise kann das Hubelement mit dem Positionierelement und dem Tragelement verbunden und gemeinsam mit dem Positionierelement und dem Tragelement vertikal verschiebbar gelagert sein (z. B. mittels eines Verbindungskörpers der Neckhandling-Behälterhalterung).

In einer weiteren Ausführungsform weist das Hubelement einen (z. B. Permanent-) Magneten auf, der vorzugsweise auf einer Oberseite der Neckhandling-Behälterhalterung angeordnet ist. Alternativ kann das Hubelement beispielsweise eine Steuerrolle oder einen Gleitschuh zum Folgen einer mechanischen Steuerkurve aufweisen. Alternativ kann das Hubelement beispielsweise ein elastisches Element, vorzugsweise eine Feder, aufweisen.

In einer weiteren Ausführungsform weist das Tragelement eine (z. B. im Wesentlichen halbkreisförmige) Aufnahme zum Aufnehmen eines Behälterhalses des Behälters unterhalb des Halsrings auf. Vorteilhaft kann damit der Behälter mittels des Tragelement am Halsring sicher für den Behältertransport abgestützt werden.

Vorzugsweise kann das Tragelement im Wesentlichen eine U-Form oder eine Gabelform aufweisen.

Ein weiterer Aspekt der vorliegenden Offenbarung betrifft eine Verwendung einer Neckhandling-Behälterhalterung wie hierin offenbart. Die Verwendung weist ein (z. B. horizontales und/oder tangentiales) Einschieben eines Behälters in die Neckhandling-Behälterhalterung (z. B. mittels eines Basehandling-Behälterförderers und/oder einer Behälterführung) auf, während das Positionierelement auf einer Mündung des Behälters liegt, sodass das Tragelement in Eingriff mit einem Behälterhals des Behälters unterhalb des Halsrings des Behälters gelangt (z. B. zum Ende des Einschiebens hin). Vorteilhaft lassen sich mit der Verwendung die gleichen Vorteile erzielen, die bereits unter Bezugnahme auf die Neckhandling-Behälterhalterung erläutert wurden.

In einem Ausführungsbeispiel weist die Verwendung ferner ein gemeinsames Anheben des Tragelements und des Positionierelements unmittelbar vor dem Einschieben oder zu Beginn des Einschiebens des Behälters, vorzugsweise mittels einer Hubvorrichtung und/oder mittels Unterschiebens des Behälters unter das Positionierelement, auf. Vorteilhaft kann damit erreicht werden, dass das Positionierelement tatsächlich oberhalb der Mündung positioniert ist, wenn der Behälter mit seiner Mündung unterhalb des Positionierelement eingeschoben wird.

In einem weiteren Ausführungsbeispiel weist die Verwendung ferner ein gemeinsames Absenken des Tragelements und des Positionierelements (z. B. schwerkraftbedingt und/oder durch Freigeben der Vertikalbewegung), bis das Positionierelement auf der Mündung liegt, vor und/oder zu Beginn des Einschiebens, auf. Vorteilhaft kann damit erreicht werden, dass wenn das Positionierelement auf Anlage mit der Mündung geht, das Tragelement auf der gewünschten Höhenposition zum Aufnehmen des Behälterhalses unterhalb des Halsrings des Behälters positioniert ist.

In einem weiteren Ausführungsbeispiel weist die Verwendung ferner ein Absenken, vorzugsweise schwerkraftbedingtes Fallen, des Behälters nach dem Einschieben, bis der Halsring des Behälters auf dem Tragelement aufliegt, auf. Vorteilhaft kann damit eine Behälterübernahme von einem Basehandling-Behälterförderer zu der Neckhandling-Behälterhalterung abgeschlossen werden, sodass der Behälter letztlich sicher an seinem Halsring von dem Tragelement abgestützt ist.

Vorzugsweise kann, während der Behälter in der Behälterhalterung gehalten ist, die Mündung vertikal beabstandet von dem Positionierelement sein.

In einem weiteren Ausführungsbeispiel weist die Verwendung ferner ein Positionieren des Tragelements und des Positionierelements auf einer vorgegebenen Höhenposition unmittelbar vor und/oder zu Beginn einer Behälterübergabe des Behälters aus der Neckhandling-Behälterhalterung zu einem weiteren Neckhandling-Behälterförderer auf, vorzugsweise mittels einer Hubvorrichtung. Vorteilhaft kann damit eine sichere Behälterübergabe an den nächsten Neckhandling-Behälterförderer sichergestellt werden.

Ein weiterer Aspekt der vorliegenden Offenbarung betrifft eine Vorrichtung zum Fördern von Behältern, aufweisend einen Neckhandling-Behälterförderer, vorzugsweise ein Neckhandling-Behälterfördererkarussell, aufweisend mindestens eine Neckhandling-Behälterhalterung wie hierin offenbart.

In einem Ausführungsbeispiel weist die Vorrichtung ferner einen Basehandling-Behälterförderer auf, der zum Übergeben der Behälter an die mindestens eine Neckhandling-Behälterhalterung des Neckhandling-Behälterförderers angeordnet ist. Vorzugsweise kann der Basehandling-Behälterförderer sich im Wesentlichen tangential zu dem Neckhandling-Behälterförderer erstrecken und/oder als Linearförderer ausgeführt sein.

In einem weiteren Ausführungsbeispiel weist die Vorrichtung ferner eine Hubvorrichtung auf.

Vorzugsweise kann die Hubvorrichtung dazu ausgebildet sein, das Tragelement und das Positionierelement der jeweiligen mindestens einen Neckhandling-Behälterhalterung unmittelbar vor einer jeweiligen Behälterübernahme gemeinsam anzuheben. Vorteilhaft kann damit sichergestellt werden, dass das Positionierelement zu Beginn der Behälterübernahme tatsächlich oberhalb von der Mündung des Behälters positioniert ist.

Bevorzugt kann die Hubvorrichtung dazu ausgebildet sein, das Tragelement und das Positionierelement der jeweiligen mindestens einen Neckhandling-Behälterhalterung zu Beginn einer jeweiligen Behälterübernahme zum, vorzugsweise schwerkraftbedingten, Absenken freizugeben und/oder nach unten zu drücken. Vorteilhaft kann damit erreicht werden, dass der Halsring des Behälters auf dem Tragelement aufliegt.

Vorzugsweise kann die Hubvorrichtung dazu ausgebildet sein, das Tragelement und das Positionierelement der jeweiligen mindestens einen Neckhandling-Behälterhalterung vor und/oder während einer Behälterübergabe zum Übergeben des Behälters an einem weiteren Neckhandling-Behälterförderer gemeinsam auf eine vorgegebene Höhenposition zu bringen oder in einer vorgegebenen Höhenposition zu sichern, vorzugsweise mittels Drücken des Tragelements und des Positionierelements nach unten. Vorteilhaft kann damit eine sichere Behälterübergabe an den nächsten Neckhandling-Behälterförderer sichergestellt werden.

In einer Ausführungsform weist die Hubvorrichtung mindestens einen Magneten, vorzugsweise Permanentmagneten, eine mechanische Steuerkurve, ein elastisch vorgespanntes Element und/oder eine Arretiereinrichtung auf.

In einer weiteren Ausführungsform weist die Vorrichtung ferner eine (z. B. stangenförmige) Behälterführung, vorzugsweise Behältermundstückführung, auf, wobei die Behälterführung zum Führen der Mündung der Behälter unterhalb des Positionierelements der mindestens einen Neckhandling-Behälterhalterung angeordnet ist, wobei vorzugsweise die Behälterführung oberhalb von dem Basehandling-Behälterförderer angeordnet ist. Vorteilhaft kann damit erreicht werden, dass die Behälter sicher unterhalb des Positionierelements geführt werden.

In einer weiteren Ausführungsform weist die Vorrichtung ferner mindestens eine Einteileinrichtung, vorzugsweise Einteilschnecke, auf, wobei die mindestens eine Einteileinrichtung an dem Basehandling-Behälterförderer zum Positionieren der Behälter mit einer vorbestimmten Teilung zueinander angeordnet ist.

Vorzugsweise kann die Neckhandling-Behälterhalterung wie hierin offenbart und/oder die Vorrichtung zum Fördern von Behältern wie hierin offenbart in einer Behälterbehandlungsanlage zum Herstellen, Reinigen, Beschichten, Prüfen, Abfüllen, Verschließen, Etikettieren, Bedrucken und/oder Verpacken von Behältern für flüssige Medien, vorzugsweise Getränke oder flüssige Nahrungsmittel, umfasst sein.

Beispielsweise können die Behälter als Flaschen oder Flakons usw. ausgeführt sein.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Draufsicht auf eine Vorrichtung zum Fördern von Behältern gemäß einem Ausführungsbeispiel der vorliegenden Offenbarung;
- Figur 2: eine perspektivische Ansicht eines Neckhandling-Behälterförderers gemäß einem Ausführungsbeispiel der vorliegenden Offenbarung;
- Figur 3: eine perspektivische Detailansicht eines Abschnitts des Neckhandling-Behälterförderers von Figur 2;
- Figur 4: eine perspektivische Detailansicht eines Abschnitts des Neckhandling-Behälterförderers von Figur 2; und
- Figur 5: eine perspektivische Detailansicht eines Abschnitts des Neckhandling-Behälterförderers von Figur 2 ohne Darstellung eines Behälters.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

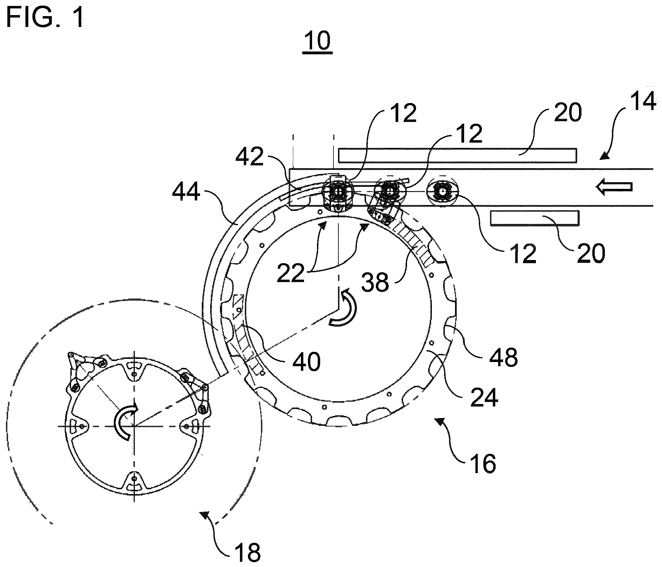

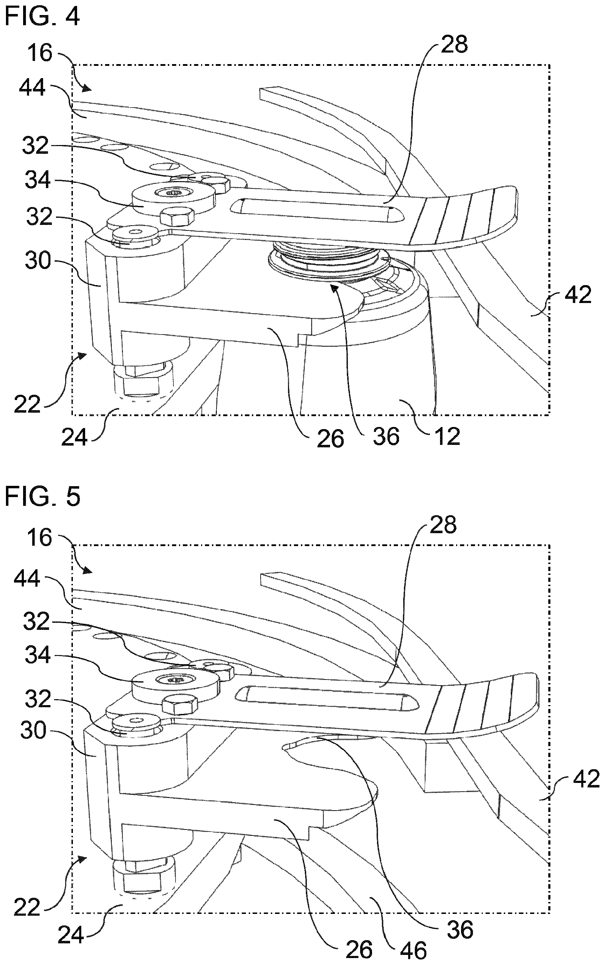

Die Figuren 1 bis 5 zeigen eine Vorrichtung 10 zum Fördern von Behältern 12 bzw. Abschnitte der Vorrichtung 10. Aus Übersichtsgründen sind in den Figuren 1 bis 4 jeweils nur eine oder einige der Behälter 12 dargestellt und in der Figur 5 gar keine Behälter dargestellt.

Bevorzugt ist die Vorrichtung 10 in einer Behälterbehandlungsanlage (nicht in den Figuren dargestellt) zum Behandeln der Behälter 12 umfasst. Besonders bevorzugt kann die Vorrichtung 10 in einem Abschnitt der Behälterbehandlungsanlage angeordnet sein, in dem von einer Basehandling-Behälterförderung zu einer Neckhandling-Behälterförderung umgestellt wird.

Die Vorrichtung 10 weist einen Neckhandling-Behälterförderer 16 auf. Die Vorrichtung 10 kann ferner einen Basehandling-Behälterförderer 14 und/oder einen weiteren Neckhandling-Behälterförderer 18 aufweisen.

Der Basehandling-Behälterförderer 14 kann direkt (behälter-) stromaufwärts von dem Neckhandling-Behälterförderer 16 angeordnet sein. Der Basehandling-Behälterförderer 14 kann die Behälter 12 an den Neckhandling-Behälterförderer 16 übergeben. Der Basehandling-Behälterförderer 14 kann die Behälter 12 beispielsweise aufrechtstehend zu dem Neckhandling-Behälterförderer 16 fördern.

Der Basehandling-Behälterförderer 14 ist bevorzugt ein Linearförderer. Vorzugsweise kann sich der Basehandling-Behälterförderer 14 im Wesentlichen tangential zu dem Neckhandling-Behälterförderer 16 erstrecken, zum Beispiel im Wesentlichen tangential zu einem Teilkreis des Neckhandling-Behälterförderers 16. Beispielsweise kann der Basehandling-Behälterförderer 14 ein Bandförderer, ein Mattenförderer (z. B. Mattenkettenförderer) oder ein Plattenförderer sein.

Mindestens eine Einteileinrichtung 20 (nur schematisch in Figur 1 dargestellt) kann dem Basehandling-Behälterförderer 14 zugeordnet sein. Die mindestens eine Einteileinrichtung 20 kann an dem Basehandling-Behälterförderer 14 angeordnet sein. Beispielsweise kann an beiden Längsseiten des Basehandling-Behälterförderers 14 eine Einteileinrichtung 20 angeordnet sein. Die mindestens eine Einteileinrichtung 20 kann die Behälter 12 auf dem Basehandling-Behälterförderer 14 in einem vorbestimmten Abstand bzw. mit einer vorbestimmten Teilung zueinander positioniert. Beispielsweise kann die mindestens eine Einteileinrichtung 20 mindestens eine Einteilschnecke aufweisen. Bevorzugt können zwei gegenüberliegende Einteilschnecke umfasst sein, die die Behälter 12 gemeinsam auf die vorbestimmte Teilung bringen.

Der Neckhandling-Behälterförderer 16 kann direkt stromabwärts von dem Basehandling-Behälterförderer 14 angeordnet sein. Der Neckhandling-Behälterförderer 16 kann die im Basehandling von dem Basehandling-Behälterförderer 14 geförderten Behälter 12 im Neckhandling übernehmen. Bevorzugt ist der Neckhandling-Behälterförderer 16 als ein Rundläufer bzw. als ein Fördererkarussell ausgeführt.

Der weitere Neckhandling-Behälterförderer 18 kann direkt behälterstromabwärts von den Neckhandling-Behälterförderer 16 angeordnet sein. Der weitere Neckhandling-Behälterförderer 18 kann die von dem Neckhandling-Behälterförderer 16 geförderten Behälter 12 im Neckhandling übernehmen. Bevorzugt ist der weitere Neckhandling-Behälterförderer 18 als ein Rundläufer bzw. als ein Fördererkarussell ausgeführt.

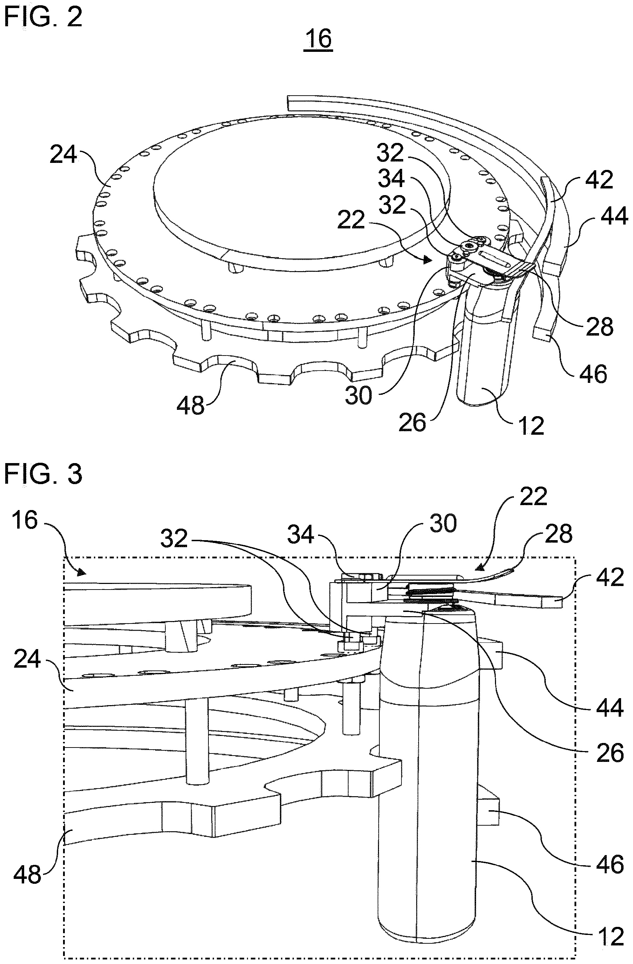

Der Neckhandling-Behälterförderer 16 weist mindestens eine Neckhandling-Behälterhalterung 22 auf. Der besseren Übersicht halber sind in der Figur 1 nur zwei Neckhandling-Behälterhalterungen 22 und in den Figuren 2 bis 5 jeweils nur eine Neckhandling-Behälterhalterung 22 dargestellt.

Bevorzugt weist der Neckhandling-Behälterförderer 16 mehrere Neckhandling-Behälterhalterungen 22 auf. Besonders bevorzugt sind die mehreren Neckhandling-Behälterhalterungen 22 um einen Umfang des als Rundläufer ausgeführten Neckhandling-Behälterförderers 16 angeordnet, zum Beispiel in gleichen Abständen.

Beispielsweise können die Neckhandling-Behälterhalterungen 22 an einer Platte 24 des Neckhandling-Behälterförderer 16 angebracht sein. Beispielsweise kann die Platte 24 Durchgangslöcher aufweisen. Die Neckhandling-Behälterhalterungen 22 können an den Durchgangslöchern angebracht bzw. gehalten sein. Die Durchgangslöcher können beispielsweise eine Oberseite der Platte 24 mit einer Unterseite der Platte 24 verbinden. Die Platte 24 kann sich im Betrieb des Neckhandling-Behälterförderers 16 drehen. Die Platte 24 ist bevorzugt kreisförmig, scheibenförmig oder ringförmig.

Die Neckhandling-Behälterhalterung 22 weist ein Tragelement 26 und ein Positionierelement 28 auf. Die Neckhandling-Behälterhalterung 22 kann ferner einen Verbindungskörper 30, mindestens eine Führungsstange 32 und/oder ein Hubelement 34 aufweisen.

Das Tragelement 26 dient zum Abstützen des Behälters 12 an einem Halsring des Behälters 12. Beispielsweise kann das Tragelement 26 den Halsring des Behälters 12 von unten abstützen. Alternativ kann das Tragelement 26 beispielsweise den Halsring von oben und unten umgreifen. Das Tragelement 26 kann radial bezüglich eines Mittelpunkts der Platte 24 über die Platte 24 überstehen oder auskragen.

Das Tragelement 26 kann eine Aufnahme 36 (siehe Figuren 4 und 5) für einen Behälterhals des Behälters 12 aufweisen. Die Aufnahme 36 kann an eine Form des Behälterhalses angepasst sein. Beispielsweise kann die Aufnahme 36 von einem u-förmigen oder gabelförmigen Abschnitt das Tragelement 26 begrenzt sein.

Das Positionierelement 28 dient zum Einstellen einer Höhenposition des Tragelements 26. Das Positionierelement 28 ist mit dem Tragelement 26 verbunden. Das Positionierelement 28 ist zum Kontaktieren einer Mündung des Behälters 12 oberhalb von dem Tragelement 26 und vorzugsweise dessen Aufnahme 36 angeordnet und gemeinsam mit dem Tragelement 26 vertikal verschiebbar gelagert. Im Betrieb soll sich das Positionierelement 28 auf eine Mündung des Behälters 12 legen, wodurch das Tragelement 26 in einer Höhenposition zum Einschieben des Behälterhalses unterhalb des Halsrings des Behälters 12 in die Aufnahme 36 positioniert wird.

Bevorzugt ist das Positionierelement 28 über den Verbindungskörper 30 mit dem Tragelement 26 verbunden. Bevorzugt sind das Positionierelement 28 und das Tragelement 26 relativ zueinander unbewegbar über den Verbindungskörper 30 miteinander verbunden.

Ein Vertikalabstand zwischen einer Unterseite des Positionierelement 28 und einer Oberseite des Tragelements 26 kann so angepasst sein, dass er einen Vertikalabstand zwischen einer Mündung des Behälters 12 und einem Behälterhals unterhalb eines Halsrings des Behälters 12 entspricht. Es ist möglich, dass ein vertikaler Abstand zwischen den Positionierelement 28 und dem Tragelement 26 durch Umrüsten der Neckhandling-Behälterhalterung 22 anpassbar ist, zum Beispiel mittels mindestens einer Unterlegscheibe und/oder mindestens eines Abstandhalters usw. Es ist ebenfalls möglich, dass das Tragelement 26 und das Positionierelement 28 über einen Verstellmechanismus (nicht in den Figuren dargestellt) miteinander verbunden sind, über den bspw. ein Vertikalabstand zwischen dem Tragelement 26 und dem Positionierelement 28 verstellbar ist.

Das Positionierelement 28 kann bspw. plattenförmig, balkenförmig, stabförmig oder zungenförmig sein. Das Positionierelement 28 ist bevorzugt als ein Kragarm ausgeführt. Das Positionierelement 28 kann über das Tragelement 26 hinaus übersteht ausgebildet sein, vorzugsweise in einer Radialrichtung bezüglich eines Mittelpunkts der Platte 24.

Das Positionierelement 28 kann einseitig fest gelagert sein, zum Beispiel an dem Verbindungskörper 30. Ein freies Ende des Positionierelements 28 kann bevorzugt nach oben gekrümmt, gebogen oder angewinkelt sein.

Beispielsweise kann das Positionierelement 28 an einer Oberseite des Verbindungskörpers 30 angeordnet sein. Bevorzugt ist das Positionierelement 28 an dem Verbindungskörper 30 befestigt, zum Beispiel mittels einer lösbaren Schraubverbindung. Das Tragelement 26 kann mit dem Verbindungskörper 30 verbunden sein. Beispielsweise kann das Tragelement 26 integral-einstückig mit dem Verbindungskörper 30 verbunden sein. Alternativ das Tragelement 26 beispielsweise an dem Verbindungskörper 30 lösbar befestigt sein (nicht in den Figuren dargestellt).

Das Tragelement 26 und das Positionierelement 28 sind gemeinsam vertikal verschiebbar gelagert. Bevorzugt sind das Tragelement 26 und das Positionierelement 28 gemeinsam entlang der mindestens einen Führungsstange 32 vertikal verschiebbar.

Beispielsweise kann der Verbindungskörper 30 blockförmig sein. Besonders bevorzugt ist der Verbindungskörper 30 verschiebbar entlang der mindestens einen Führungsstange 32 geführt. Beispielsweise kann der Verbindungskörper 30 für jede Führungsstange 32 ein Durchgangsloch aufweisen, in dem ein Abschnitt der jeweiligen Führungsstange 32 aufgenommen ist. Die mindestens eine Führungsstange 32 kann vertikal ausgerichtet sein. Die mindestens eine Führungsstange 32 kann an der Platte 24 befestigt sein. Beispielsweise kann die mindestens eine Führungsstange 32 auf einer Oberseite der Platte 24 befestigt sein. Bevorzugt kann die mindestens eine Führungsstange 32 mittels einer Schraubverbindung an der Platte 24 befestigt sein.

Das Hubelement 34 kann Teil einer Hubvorrichtung 34, 38, 40 sein. Mittels der Hubvorrichtung 34, 38, 40 kann eine Höhenposition des Tragelements 26 und des Positionierelements 28 gemeinsam verändert werden.

Im dargestellten Ausführungsbeispiel kann das Hubelement 34 als ein (z. B. Permanent-) Magnet ausgebildet sein. Das Hubelement 34 kann an einer Oberseite der Neckhandling-Behälterhalterung 22 angeordnet sein, zum Beispiel oberhalb des Verbindungskörpers 30. Das Hubelement 34 kann fest bzw. unbewegbar mit dem Verbindungskörpers 30 verbunden sein, z. B. mittels einer Schraubverbindung.

Die Hubvorrichtung 34, 38, 40 kann ferner einen (z. B. Permanent-) Magneten 38 (nur in Figur 1 dargestellt) aufweisen. Der Magnet 38 kann oberhalb der Platte 24 angeordnet sein. Der Magnet 38 kann stationär angeordnet sein. Unterhalb des Magneten 38 kann das Hubelement 34 der mindestens einen Neckhandling-Behälterhalterung 22 während des Betriebs des Neckhandling-Behälterförderer 16 durchlaufen. Der Magnet 38 kann eine Ringsegmentform aufweisen. Der Magnet 38 kann sich innerhalb eines Abschnitts direkt neben bzw. stromaufwärts von einem Behälterübergabebereich der Behälterförderer 14 und 16 erstrecken bzw. angeordnet sein.

Der Magnet 38 kann dafür sorgen, dass durch magnetische Wechselwirkung mit dem Magneten 34, während die jeweilige Neckhandling-Behälterhalterung 22 einen Abschnitt unterhalb des Magneten 38 durchquert, der Magnet 34 angehoben oder gedrückt wird, z. B. durch magnetisches Anziehen des Magneten 34. Gemeinsam mit dem Magneten 34 werden das Tragelement 26 und das Positionierelement 28 der jeweiligen Neckhandling-Behälterhalterung 22 zur Vorbereitung einer Übernahme eines Behälters 12 angehoben, z. B. in einem Bereich zwischen 1 mm und 10 mm, vorzugsweise zwischen 3 mm und 8 mm, besonders bevorzugt rund 6 mm.

Die Hubvorrichtung 34, 38, 40 kann ferner einen (z. B. Permanent-) Magneten 40 (nur in Figur 1 dargestellt) aufweisen. Der Magnet 40 kann oberhalb der Platte 24 angeordnet sein. Der Magnet 40 kann stationär angeordnet sein. Unterhalb des Magneten 40 kann das Hubelement 34 der mindestens einen Neckhandling-Behälterhalterung 22 während des Betriebs des Neckhandling-Behälterförderer 16 durchlaufen. Der Magnet 40 kann eine Ringsegmentform aufweisen. Der Magnet 40 kann sich innerhalb eines Behälterübergabebereichs der Behälterförderer 16 und 18 erstrecken bzw. angeordnet sein.

Der Magnet 40 kann dafür sorgen, dass durch magnetische Wechselwirkung mit dem Magneten 34, während die jeweilige Neckhandling-Behälterhalterung 22 einen Abschnitt unterhalb des Magneten 38 durchquert, der Magnet 34 nach unten gedrückt wird, z. B. durch magnetisches Abstoßen des Magneten 34. Gemeinsam mit dem Magneten 34 werden das Tragelement 26 und das Positionierelement 28 der jeweiligen Neckhandling-Behälterhalterung 22 nach unten gedrückt, zum Beispiel auf Anschlag mit der Platte 24. Der Halsring des jeweils gehaltenen Behälters 12 nimmt eine vorgegebene Höhenposition zum Übergeben an den Neckhandling-Behälterförderer 18 ein.

Alternativ zu der magnetisch betätigten Hubvorrichtung 34, 38, 40 kann beispielsweise eine mechanische Hubvorrichtung (nicht in den Figuren dargestellt) umfasst sein. Die mechanische Hubvorrichtung kann beispielsweise eine stationäre mechanische Steuerkurve und je Neckhandling-Behälterhalterung 22 eine Steuerrolle oder einen Gleitschuh als das Hubelement 34 aufweisen, die/der der mechanische Steuerkurve zum Anpassen einer Höhenposition des Tragelements 26 und des Positionierelements 28 der jeweiligen Neckhandling-Behälterhalterung 22 folgt. Alternativ hierzu kann beispielsweise ein elastisches Element, wie beispielsweise eine Feder, je Neckhandling-Behälterhalterung 22 als das Hubelement 34 und eine stationäre Arretiereinrichtung, die das elastische Element in einem vorgespannten Zustand zeitweise oder abschnittsweis arretieren kann, als mechanische Hubvorrichtung vorgesehen sein.

Es ist auch möglich, dass keine gesonderte Hubvorrichtung umfasst ist. Stattdessen kann beispielsweise das Tragelement 26 gemeinsam mit dem Positionierelement 28 durch Unterschieben des Behälters 12 direkt unter das Positionierelement 28 angehoben werden. Das Tragelement 26 kann auch eine Höhenposition angehoben werden, in der die Aufnahme 36 auf Höhe des Behälterhalses unterhalb des Halsrings des Behälter 12 positioniert ist. In einer solchen Ausführungsform weist das Positionierelement 28 besonders bevorzugt das nach oben gebogene, angewinkelte oder gekrümmte freie Ende auf.

Der Neckhandling-Behälterförderer 16 kann ferner mindestens eine Behälterführung 42, 44, 46 und/oder 48 aufweisen.

Die Behälterführung 42 kann eine stationäre Behälterführung sein. Die Behälterführung 42 kann als eine Mundstückführung zur Führung eines Mundstücks des Behälters 12 angeordnet sein. Die Behälterführung 42 kann die Behälter 12 derart auf dem Basehandling-Behälterförderer 14 führen bzw. querverschieben, dass die Mündung des jeweiligen Behälters 12 nach unterhalb des Positionierelements 28 geführt wird. Die Behälterführung 42 kann oberhalb von dem Basehandling-Behälterförderer 14 angeordnet sein. Die Behälterführung 42 kann die Behälter 12 unter das Positionierelement 28 der mindestens einen Neckhandling-Behälterhalterung 22 schieben. Das Schieben kann dadurch bewirkt sein, dass die Behälter 12 von dem Basehandling-Behälterförderer 14 entlang der Behälterführung 42 geführt werden.

Die Behälterführung 44, 46 kann eine stationäre Behälterführung sein. Die Behälterführung 44, 46 kann als eine Rumpfführung zur Führung eines Rumpfes des Behälters 12 angeordnet sein. Die Behälterführung 44, 46 kann die Behälter 12 während des Transports in der mindestens einen Neckhandling-Behälterhalterung 22 von (radial) außen führen. Beispielsweise kann die Behälterführung 44, 46 eine Ringsegmentform aufweisen. Die Behälterführung 44 kann oberhalb von der Behälterführung 46 angeordnet sein.

Die Behälterführung 48 kann eine sich bewegende, vorzugsweise mitdrehende, Behälterführung sein. Die Behälterführung 48 kann sich beispielsweise im Betrieb mit der Platte 24 mitdrehen. Beispielsweise kann die Behälterführung 48 unterhalb von der Platte 24 angeordnet sein. Bevorzugt kann die Behälterführung 48 von unten an der Platte 24 angebracht sein, zum Beispiel mittels Schraubverbindungen. Die Behälterführung 48 kann beispielsweise als ringförmige oder scheibenförmige Platte ausgeführt sein. An der Außenumfangsseite der Platte können mehrere Aufnahmen für Behälter 12 angeordnet sein, vorzugsweise gleichmäßig verteilt um einen Außenumfang der Platte.

Nachfolgend ist ein beispielhafter Betrieb der Vorrichtung 10 unter Bezugnahme auf die Figuren 1 bis 5 beschrieben.

Behälter 12, die beispielsweise herstellungsbedingt unterschiedliche Behälterhöhen aufweisen können, können von dem Basehandling-Behälterförderer 14 hin zu einem Behälterübergabebereich zum Übergeben der Behälter 12 an den Neckhandling-Behälterförderer 16 gefördert werden. Die Behälter 12 können stehend auf dem Basehandling-Behälterförderer 14 von der mindestens einen Einteileinrichtung 20 auf eine vorbestimmte Teilung gebracht werden.

Das Positionierelement 28 und das Tragelement 26 können gemeinsam durch die Hubvorrichtung 34, 38 vor Erreichen des Behälterübergabebereichs angehoben werden, z. B. durch magnetische Wechselwirkung zwischen dem Hubelement 34 und dem Magneten 38.

Mit Erreichen des Behälterübergabebereichs können die Behälter 12 von der Behälterführung 42 quer hin zu dem Neckhandling-Behälterförderer 16 unterhalb des Positionierelements 28 geschoben werden. Mit Erreichen des Behälterübergabebereichs kann das Positionierelement 28 auf die Mündung des Behälters 12 abgesenkt werden, bis es auf der Mündung aufliegt. Dadurch kann das sich gemeinsam mit dem Positionierelement 28 vertikal bewegende Tragelement 26 auf Höhe des Behälterhalses unterhalb des Halsrings des Behälters 12 gebracht werden.

Alternativ zum Anheben und Absenken des Positionierelements 28 und des Tragelements 26 ist es bspw. ebenfalls möglich, dass der Behälter 12 von der Behälterführung 42 unter das Positionierelement 28 geschoben wird. Das Positionierelement 28 kann gemeinsam mit dem Tragelement 26 angehoben werden, sodass das Tragelement 26 auf Höhe des Behälterhalses unterhalb des Halsrings des Behälters 12 gebracht werden kann.

Im Behälterübergabebereich kann die Behälterführung 42 den Behälter 12 mit dessen Behälterhals in die nunmehr auf richtiger Höhe positionierte Aufnahme 36 und ggf. die Behälterführung 48 schieben. Am Ende des Basehandling-Behälterförderers 14 können die übernommenen Behälter 12 schließlich mit ihrem Halsring auf das Tragelement 26 (z. B. im Millimeter- oder Zehntelmillimeterbereich) abgesenkt werden, z. B. durch schwerkraftbedingtes Fallen der Behälter 12 stromab des Basehandling-Behälterförderers 14 oder durch eine Rampe am Ende des Basehandling-Behälterförderers 14. Der Behälter 12 kann nun im Neckhandling von der Neckhandling-Behälterhalterung 22 getragen sein.

Der von der Neckhandling-Behälterhalterung 22 getragene Behälter 12 kann zu einem weiteren Behälterübergabebereich mit dem weiteren Neckhandling-Behälterförderer 18 gefördert werden, z. B. geführt durch die Behälterführung 44, 46. Vor oder bei Erreichen des weiteren Behälterübergabebereichs können das Tragelement 26 und das Positionierelement 28 mittels der Hubvorrichtung 34, 40 auf eine vorgegebene Höhenposition für die Behälterübergabe gebracht werden. Bevorzugt kann der Magnet 40 das ebenfalls als Magnet ausgeführte Hubelement 34 nach unten drücken. Sofern noch eine vertikale Bewegbarkeit besteht, können das Positionierelement 28 und das Tragelement 26 und ggf. der Verbindungskörper 30 sich vertikal nach unten entlang der mindestens einen Führungsstange 32 bewegen, vorzugsweise bis der Verbindungskörper 30 oder das Tragelement 26 auf Anschlag mit der Platte 24 geht. Sofern keine vertikale Bewegbarkeit mehr besteht, können das Positionierelement 28 und das Tragelement 26 und ggf. der Verbindungskörper 30 zumindest nach unten gegen die Platte 24 gedrückt und somit in dieser Position gesichert werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Tragelements und/oder des Positionierelements des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Vorrichtung zum Fördern von Behältern
- 12: Behälter
- 14: Basehandling-Behälterförderer
- 16: Neckhandling-Behälterförderer
- 18: weiterer Neckhandling-Behälterförderer
- 20: Einteileinrichtung
- 22: Neckhandling-Behälterhalterung
- 24: Platte
- 26: Tragelement
- 28: Positionierelement
- 30: Verbindungskörper
- 32: Führungsstange
- 34: Hubelement (Teil der Hubvorrichtung)
- 36: Aufnahme
- 38: Magnet (Teil der Hubvorrichtung)
- 40: Magnet (Teil der Hubvorrichtung)
- 42: Behälterführung
- 44: Behälterführung
- 46: Behälterführung
- 48: Behälterführung

## Patentansprüche

1. Neckhandling-Behälterhalterung (22) für einen Behälterförderer (16), aufweisend:
ein Tragelement (26) zum Abstützen eines Behälters (12) an einem Halsring des Behälters (12); und
ein Positionierelement (28), das zum Einstellen einer Höhenposition des Tragelements (26) mit dem Tragelement (26) verbunden ist,
wobei das Positionierelement (28) zum Kontaktieren einer Mündung des Behälters (12) oberhalb von dem Tragelement (26) angeordnet und gemeinsam mit dem Tragelement (26) vertikal verschiebbar gelagert ist.

2. Neckhandling-Behälterhalterung (22) nach Anspruch 1, wobei:
das Positionierelement (28) plattenförmig, balkenförmig, stabförmig oder zungenförmig ist; und/oder
das Positionierelement (28) als ein Kragarm ausgeführt ist.

3. Neckhandling-Behälterhalterung (22) nach Anspruch 1 oder Anspruch 2, wobei:
das Positionierelement (28) über das Tragelement (26) hinaus überstehend ausgebildet ist, vorzugsweise in einer Richtung entgegengesetzt zu der vertikal verschiebbaren Lagerung.

4. Neckhandling-Behälterhalterung (22) nach einem der vorherigen Ansprüche, wobei:
das Positionierelement (28) ein freies Ende aufweist, das nach oben gekrümmt, gebogen oder angewinkelt ist.

5. Neckhandling-Behälterhalterung (22) nach einem der vorherigen Ansprüche, wobei:
das Positionierelement (28) und das Tragelement (26) relativ zueinander unbewegbar miteinander verbunden sind.

6. Neckhandling-Behälterhalterung (22) nach einem der vorherigen Ansprüche, ferner aufweisend:
ein Hubelement (34) zum gemeinsamen Anheben des Positionierelements (28) und des Tragelements (26), vorzugsweise unmittelbar vor einer Behälterübernahme und/oder geführt entlang mindestens einer Führungsstange (32), an der das Positionierelement (28) und das Tragelement (26) gemeinsam vertikal verschiebbar gelagert sind.

7. Neckhandling-Behälterhalterung (22) nach Anspruch 6, wobei das Hubelement (34) aufweist:
einen Magneten, der vorzugsweise auf einer Oberseite der Neckhandling-Behälterhalterung (22) angeordnet ist; oder
eine Steuerrolle oder ein Gleitschuh zum Folgen einer mechanischen Steuerkurve; oder
ein elastisches Element, vorzugsweise eine Feder.

8. Neckhandling, Behälterhalterung (22) nach einem der vorherigen Ansprüche, wobei:
das Tragelement (26) eine Aufnahme (36) zum Aufnehmen eines Behälterhalses des Behälters (12) unterhalb des Halsrings aufweist.

9. Verwendung einer Neckhandling-Behälterhalterung (22) nach einem der vorherigen Ansprüche, aufweisend:
Einschieben eines Behälters (12) in die Neckhandling-Behälterhalterung (22), während das Positionierelement (28) auf einer Mündung des Behälters (12) liegt, sodass das Tragelement (26) in Eingriff mit einem Behälterhals des Behälters (12) unterhalb des Halsrings des Behälters (12) gelangt.

10. Verwendung nach Anspruch 9, ferner aufweisend mindestens eines von:
gemeinsames Anheben des Tragelements (26) und des Positionierelements (28) unmittelbar vor dem Einschieben oder zu Beginn des Einschiebens des Behälters (12), vorzugsweise mittels einer Hubvorrichtung (34, 38) und/oder mittels Unterschiebens des Behälters (12) unter das Positionierelement (28);
gemeinsames Absenken des Tragelements (26) und des Positionierelements (28), bis das Positionierelement (28) auf der Mündung liegt, vor und/oder zu Beginn des Einschiebens;
Absenken, vorzugsweise schwerkraftbedingtes Fallen, des Behälters (12) nach dem Einschieben, bis der Halsring des Behälters (12) auf dem Tragelement (26) aufliegt; und
Positionieren des Tragelements (26) und des Positionierelements (28) auf einer vorgegebenen Höhenposition unmittelbar vor und/oder zu Beginn einer Behälterübergabe des Behälters (12) aus der Neckhandling-Behälterhalterung (22) zu einem weiteren Neckhandling-Behälterförderer (18), vorzugsweise mittels einer Hubvorrichtung (34, 40).

11. Vorrichtung (10) zum Fördern von Behältern (12), aufweisend:
einen Neckhandling-Behälterförderer (16), vorzugsweise ein Neckhandling-Behälterfördererkarussell, aufweisend mindestens eine Neckhandling-Behälterhalterung (22) nach einem der Ansprüche 1 bis 8.

12. Vorrichtung (10) nach Anspruch 11, ferner aufweisend:
einen Basehandling-Behälterförderer (14), der zum Übergeben der Behälter (12) an die mindestens eine Neckhandling-Behälterhalterung (22) des Neckhandling-Behälterförderers (16) angeordnet ist,
wobei vorzugsweise der Basehandling-Behälterförderer (14) sich im Wesentlichen tangential zu dem Neckhandling-Behälterförderer (16) erstreckt und/oder als Linearförderer ausgeführt ist.

13. Vorrichtung (10) nach Anspruch 11 oder Anspruch 12, ferner aufweisend:
eine Hubvorrichtung (34, 38, 40), die dazu ausgebildet ist,
- das Tragelement (26) und das Positionierelement (28) der jeweiligen mindestens einen Neckhandling-Behälterhalterung (22) unmittelbar vor einer jeweiligen Behälterübernahme gemeinsam anzuheben; und/oder
- das Tragelement (26) und das Positionierelement (28) der jeweiligen mindestens einen Neckhandling-Behälterhalterung (22) zu Beginn einer jeweiligen Behälterübernahme zum, vorzugsweise schwerkraftbedingten, Absenken freizugeben und/oder nach unten zu drücken; und/oder
- das Tragelement (26) und das Positionierelement (28) der jeweiligen mindestens einen Neckhandling-Behälterhalterung (22) vor und/oder während einer Behälterübergabe zum Übergeben des Behälters (12) an einem weiteren Neckhandling-Behälterförderer (16) gemeinsam auf eine vorgegebene Höhenposition zu bringen oder in einer vorgegebenen Höhenposition zu sichern, vorzugsweise mittels Drücken des Tragelements (26) und des Positionierelements (28) nach unten.

14. Vorrichtung (10) nach Anspruch 13, wobei:
die Hubvorrichtung (34, 38, 40) mindestens einen Magneten (34, 40), vorzugsweise Permanentmagneten, eine mechanische Steuerkurve, ein elastisch vorgespanntes Element oder eine Arretiereinrichtung aufweist.

15. Vorrichtung (10) nach einem der Ansprüche 11 bis 14, ferner aufweisend:
eine Behälterführung (44), vorzugsweise Behältermundstückführung, wobei die Behälterführung (44) zum Führen der Mündung der Behälter (12) unterhalb des Positionierelements (28) der mindestens einen Neckhandling-Behälterhalterung (22) angeordnet ist, wobei vorzugsweise die Behälterführung (44) oberhalb von dem Basehandling-Behälterförderer (14) angeordnet ist; und/oder
mindestens eine Einteileinrichtung (20), vorzugsweise Einteilschnecke, wobei die mindestens eine Einteileinrichtung (20) an dem Basehandling-Behälterförderer (14) zum Positionieren der Behälter (12) mit einer vorbestimmten Teilung zueinander angeordnet ist.
